# EUROPEAN PATENT APPLICATION

(11) **EP 2 712 966 A1**
(43) Date of publication of application: **02.04.2014**
(21) Application number: 13185107.3
(22) Date of filing: 19.09.2013
(51) Int. Cl.: E02F 9/00, B60R 3/00, B66C 13/54, E02F 9/08, E05D 11/10, F16C 11/10

(54) **Pivoting unit including pivotable body**

(30) Priority: 28.09.2012 JP 2012216967
(71) Applicant: Kobelco Construction Machinery Co., Ltd., Hiroshima 731-5161 (JP)
(72) Inventor: Muraoka, Daisuke, Hiroshima-shi, Hiroshima 731-5161 (JP); Yamasaki, Takanori, Hiroshima-shi, Hiroshima 731-5161 (JP); Nagai, Kouichirou, Hiroshima-shi,, Hiroshima 731-5161 (JP)
(74) Representative: TBK

(57) **Abstract**

Provided is a pivoting unit including a pivotable body (25), a horizontal pivot shaft (32), a support (26) for supporting the pivotable body (25) pivotably about the pivot shaft (32) so as to allow the pivotable body (25) to take a fallen posture and a raised posture in which the pivotable body is more raised than the fallen posture, and a stop member (37) for stopping the pivotable body (25) in the raised posture. The stop member (37) includes a long hole (38) vertically extending and allowing the pivot shaft (32) to be inserted therethrough, being disposed vertically movably between upper and lower positions. The stop member (37), in the lower position, abuts against an abutment portion (36), a specific part at a lower end of the pivotable body (25) in the raised posture, to retain the pivotable body (25) in the raised posture, while, in the upper position, allowing the pivotable body (25) to pivot from the raised posture toward the fallen posture.

## Description

### BACKGROUND OF THE INVENTION

### 1. Field of the Invention

The present invention relates to a pivoting unit including a pivotable body capable of pivoting between a fallen posture and a raised posture, such as a footboard of a catwalk provided to a construction machine.

### 2. Description of the Related Art

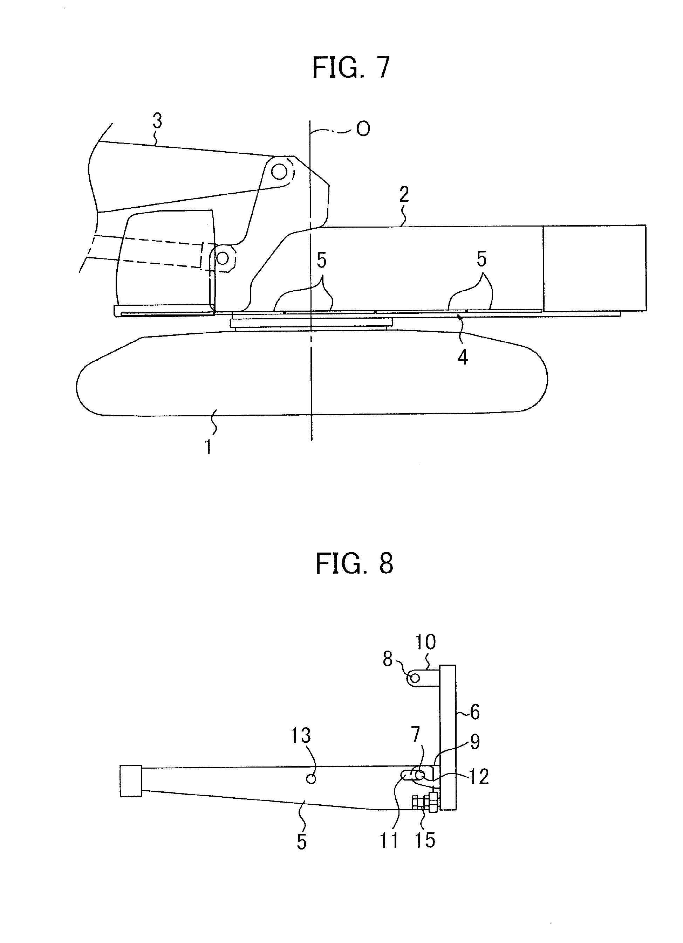

The related art of the present invention is explained by taking, as an example, a footboard of a catwalk provided to a large excavator as shown in Fig. 7. This excavator comprises a crawler-type base carrier 1, an upper slewing structure 2 mounted so as to be capable of slewing on the base carrier 1 around an axis O that is perpendicular to the ground, a work attachment 3 attached to the upper slewing structure 2, and a pivoting unit. The pivoting unit includes a catwalk 4, which is a pivotable body, and a support for supporting the catwalk 4.

The catwalk 4 configures an operator passage positioned laterally outside the upper slewing structure 2, the operator passage being adapted for use of mounting/removing counter weights and the attachment 3, maintenance of the engine and other machinery, or the like. The catwalk 4 comprises a plurality of footboards 5, which have respective rectangular shapes and are disposed to be aligned longitudinally of the catwalk 4 immediately outside the side surface (left-side surface in Fig. 7) of the upper slewing structure 2. In the ensuing explanation, the direction in which the footboards 5 are aligned, i.e., the length direction of the upper slewing structure 2, is referred to as a longitudinal direction with regard to the footboards 5, and a direction that is orthogonal thereto is referred to as a lateral direction.

The support, which is used for mounting the footboards 5 on the side surface of the upper slewing structure 2 and pivotably supporting the catwalk 4, includes, as shown in Fig. 8, a mounting frame 6, a lower bracket 9, an upper bracket 10, and a pivot shaft 12. The mounting frame 6 is fixed to the side surface of the upper slewing structure 2 in an upstanding posture as shown in Fig. 8. Each of the brackets 9 and 10 protrudes horizontally outward from the mounting frame 6, including a shaft hole 7 and a fixation hole 8. The footboard 5 is provided with a long hole 11, which is formed at the basal end of the footboard 5, i.e., the end on the upper slewing structure side, and has a shape of extending laterally, that is, a horizontal direction, in a state where the footboard 5 is expanded.

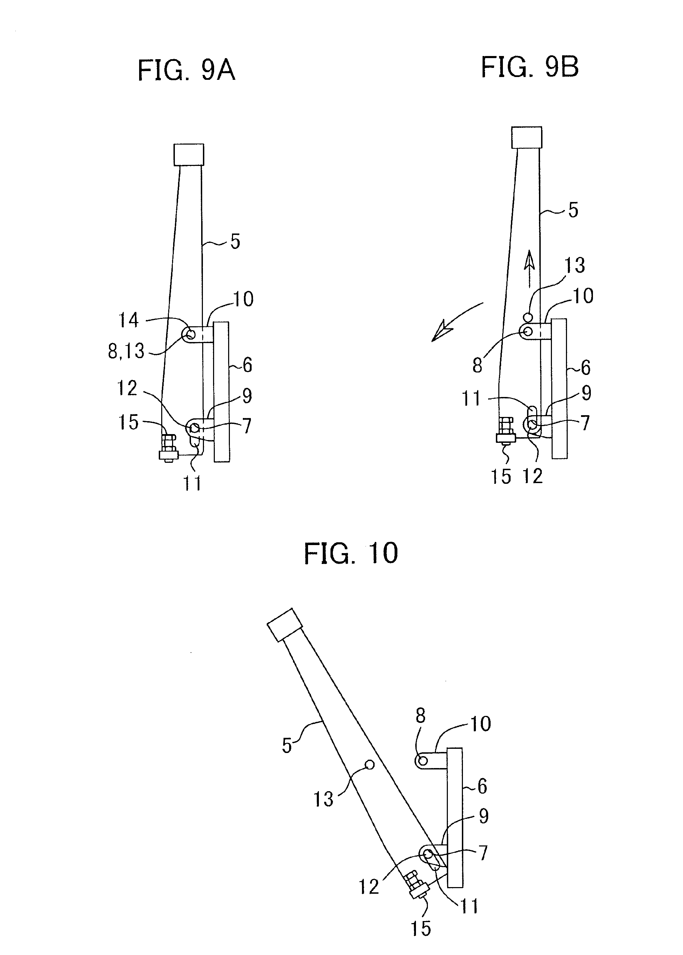

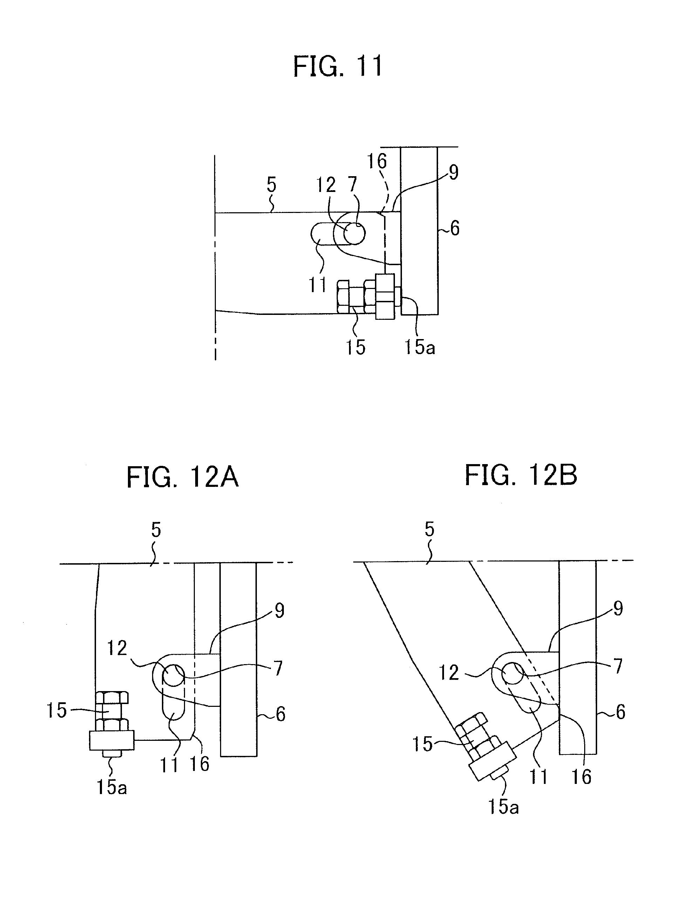

The pivot shaft 12 is inserted through the shaft hole 7 of the lower bracket 9 and the long hole 11, thus allowing the footboards 5 to be mounted to the upper slewing structure 2 pivotably about the pivot shaft 12 between a retracted posture and an expanded posture. The retracted posture is an upstanding posture where the respective footboards 5 are upstanding as shown in Fig. 9A and Fig. 12A; while the expanded posture is a posture where each of the footboards 5 has collapsed from the raised posture so as to be expanded horizontally outward as shown in Figs. 7, 8, and 11.

For retaining the footboards 5 in the retracted posture, used is a fixation pin 14 as shown in Fig. 9A. The fixation pin 14 is inserted through the fixation hole 13 provided in the mid-portion of the footboard 5 and the fixation hole 8 of the upper bracket 10, in a state where the footboards 5 are in the retracted posture. The footboards 5 are thereby fixed in the retracted posture. In other words, the fixation holes 8, 13 and the fixation pin 14 constitute means for fixing the footboards 5 in the retracted posture.

Moreover, for retaining the footboards 5 in the expanded posture shown in Fig. 8 and Fig. 11, used is an adjustment bolt 15. The adjustment bolt 15 is threadably mounted on the basal end of the footboard 5 at a position below the pivot shaft 12 in the expanded posture, while keeping a horizontal posture. A tip 15a of the adjustment bolt 15 shown in Fig. 11 is therefore displaced in the lateral direction with the rotation of the adjustment bolt 15 itself. The tip 15a abuts against the lower end of the mounting frame 6 as shown in Fig. 11 in the expanded posture, thereby retaining the footboard 5 in the expanded state and supporting downward load acting on the footboard 5. Moreover, the horizontal displacement of the tip 15a enables the horizontality of the footboard 5 to be adjusted.

The footboards 5 can be shifted to the retracted posture by pivoting upward as shown in Fig. 9A and Fig. 12A, from the expanded posture shown in Figs. 7, 8, and 11. During this pivoting, the footboard 5 is lowered by its self-weight within the range of the long hole 11. The fixation pin 14 is thereby inserted into the fixation holes 8 and 13 whose positions have coincided with each other, thus fixing, namely fully fixing, the footboard 5 in the retracted posture.

The footboard 5 includes a rib, whose basal end, that is, whose lower end in the retracted posture, is formed with an abutment portion 16. The abutment portion 16 is formed of such a face as to cut the base end in an oblique direction as shown in Fig. 11, Fig. 12A and Fig. 12B, and comes into contact with the mounting frame 6 in a state where the footboard 5 has been lowered, during the course of shifting to the retracted posture shown in Fig. 10 and Fig. 12B, to thereby enable the footboard 5 to be retained at an intermediate posture between the expanded posture and the retracted posture. In summary, the abutment portion 16 makes it possible to temporarily retain the footboard 5 in the intermediate posture so as to prevent the footboard 5 from being accidentally fallen down during the course of shifting to the retracted posture.

Fig. 9B shows a state where the footboard 5 is raised so as to prevent the abutment portion 16 from coming into contact with the mounting frame 6 (in order to release the stopper function) during the shift of the footboard 5 from the retracted posture to the expanded posture. From the foregoing state, the footboard 5 can be shifted to the expanded posture by pivoting outward.

Can be found no publication which describes conventional technology comprising the stopper function. As a related art, Japanese Patent Application Publication No. H7-310334 describes a type including a footboard configuring a catwalk, and a support member for pivotably supporting the footboard in an outward horizontal expanded posture and an inward horizontal retracted posture around a pivot shaft, wherein the support member includes a vertically extending long hole through which the pivot shaft is passed through to enable the footboard to make the vertical movement. As to this known technology, where the footboard pivots downward to be retracted in an inward horizontal posture, it is described to raise the footboard so as to prevent it from interference with a base carrier until reaching the retracted posture.

The foregoing art requires an operation of raising and pivoting the footboard 5 to prevent the stopper function from being performed when the footboard 5 is shifted to the expanded posture. Moreover, the footboard 5 has a great weight to have sufficient width and strength as a passage and the foregoing operation must be performed at a high place. Hence, the above operation places a considerable workload on the operator and markedly deteriorates the operation efficiency. This problem is not limited to the illustrated footboard 5 of the catwalk 4 but, for example, may broadly exist as to various pivoting bodies that are converted between a fallen posture and a raised posture such as a handrail configuring the catwalk which takes on a raised posture during use and takes on a fallen posture during non-use, respectively.

### SUMMARY OF THE INVENTION

An object of this invention is to provide a pivoting unit including a pivotable body capable of pivoting between a fallen posture and a raised posture, the pivoting unit having a function of retaining the pivotable body in a raised posture while allowing the posture of the pivotable body to be easily and efficiently shifted. The pivoting unit provided by the present invention comprises: a pivotable body; a horizontal pivot shaft, a support for supporting the pivotable body pivotably about the pivot shaft so as to allow the pivotable body to take both of a fallen posture and a raised posture in which the pivotable body is more raised than the fallen posture; and a stop member for stopping the pivotable body in the raised posture. The stop member includes a long hole which has a shape vertically extending and allowing the pivot shaft to be inserted through the long hole, disposed so as to be restricted from pivot movement relative to the support between an upper position and a lower position while being permitted to make vertical movement within a range of a vertical dimension of the long hole. At the lower position, the stopper member abuts against an abutment portion which is a specific part in a lower end of the pivotable body in the raised posture to retain the pivotable body in the raised posture; in the upper position, the stopper member comes off from a pivoting locus of the abutment portion of the pivotable body to thereby permit the pivotable body to pivot from the raised posture toward the fallen posture.

### BRIEF DESCRIPTION OF THE DRAWINGS

Fig. 1 is a side view showing a pivoting unit according to an embodiment of the present invention in a state where a footboard configuring a catwalk thereof is retracted;
Fig. 2A is an enlarged view of the area including the pivoting center portion of the footboard in the state shown in Fig. 1, and Fig. 2B is a diagram corresponding to Fig. 2A showing a state where the stop member is in the upper position;
Fig. 3 is a diagram corresponding to Fig. 2A showing a state where the footboard is expanded;
Fig. 4 is a side view showing the overall pivoting unit in a state where the footboard is expanded;
Fig. 5 is a perspective view of the pivoting center portion in a state where the footboard is retracted;
Fig. 6 is a perspective view of the pivoting center portion in a state where the footboard is expanded;
Fig. 7 is a side view of an excavator comprising the catwalk;
Fig. 8 is a side view showing a state where the footboard is expanded in a conventional pivoting unit;
Fig. 9A is a side view showing a state where the footboard shown in Fig. 8 is retracted, and Fig. 9B is a side view showing a state where the footboard is raised for housing;
Fig. 10 is a side view showing a state where the footboard shown in Fig. 8 is retained in an intermediate posture in the course of reaching the retracted posture;
Fig. 11 is an enlarged view of the area including the pivoting center portion of the footboard in the state shown in Fig. 8; and
Fig. 12A is an enlarged view of the area including the pivoting center portion of the footboard shown in Fig. 9A, and Fig. 12B is an enlarged view of the area including the pivoting center portion of the footboard shown in Fig. 10.

### DESCRIPTION OF THE PREFERRED EMBODIMENTS

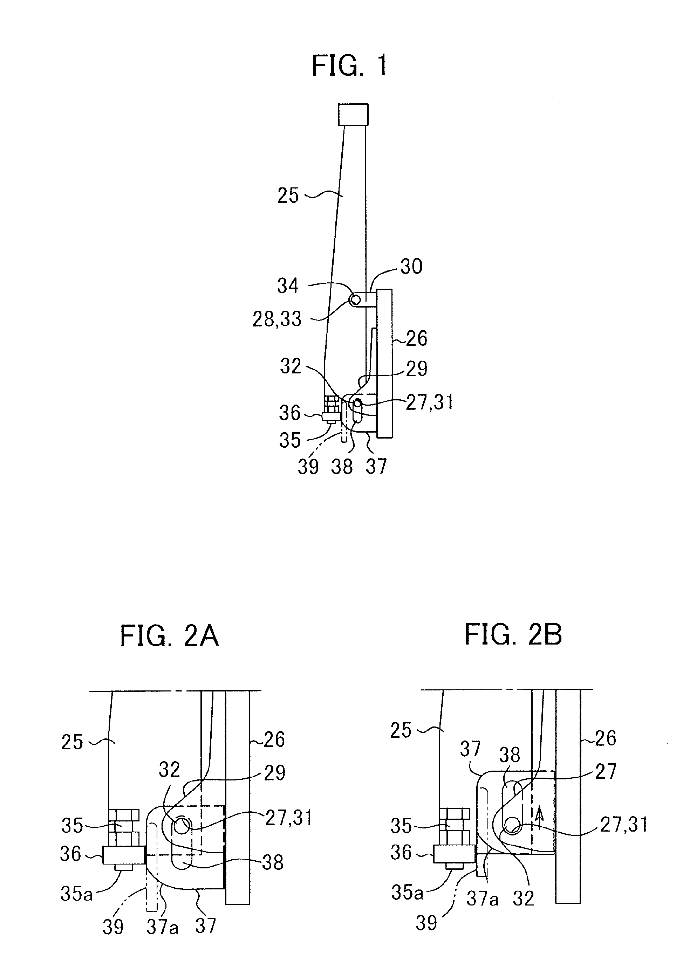

There will be explained an embodiment of the present invention, with reference to Fig. 1 to Fig. 6.

The pivoting unit according to this embodiment comprises a pivotable body including a footboard 25, a pivot shaft 32 retained by the footboard 25 and expanded to either side in the front-back direction from the footboard 25, and a support for supporting the footboard 25 via the pivot shaft 32. The support is mounted on an upper slewing structure 2 of a construction machine; for instance, a large excavator provided with a base machine including a base carrier 1 and the upper slewing structure 2 shown in Fig. 7. As with the footboard 5 explained in the Description of the Related Art, the footboard 25 forms a catwalk 4 provided to the large excavator. The support, while being mounted on the outer face of the upper slewing structure 2 shown in Fig. 7, supports the footboard 25 so as to allow the footboard 25 to pivot about the pivot shaft 32.

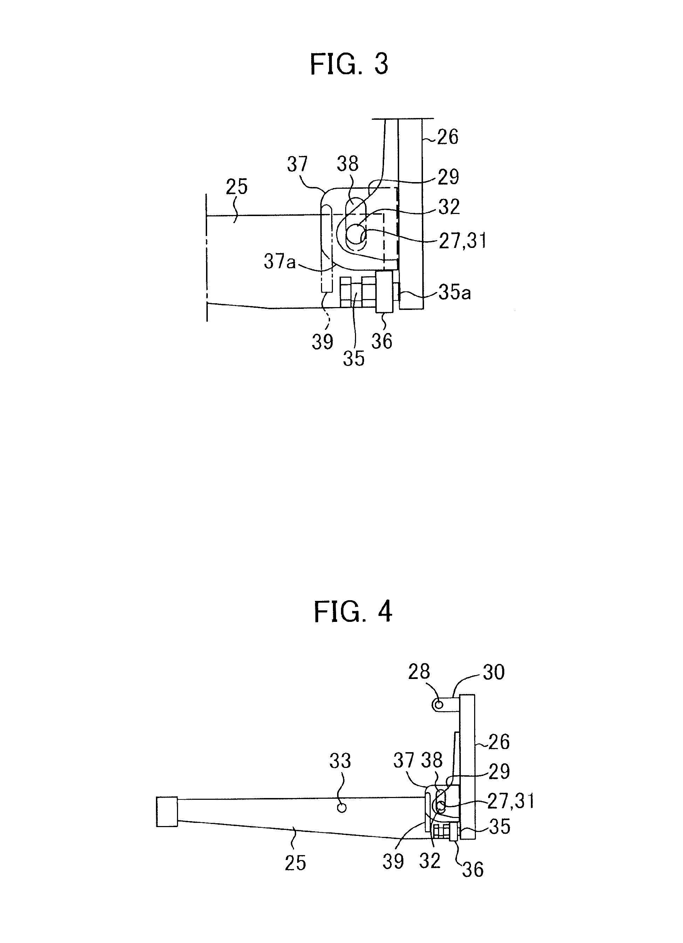

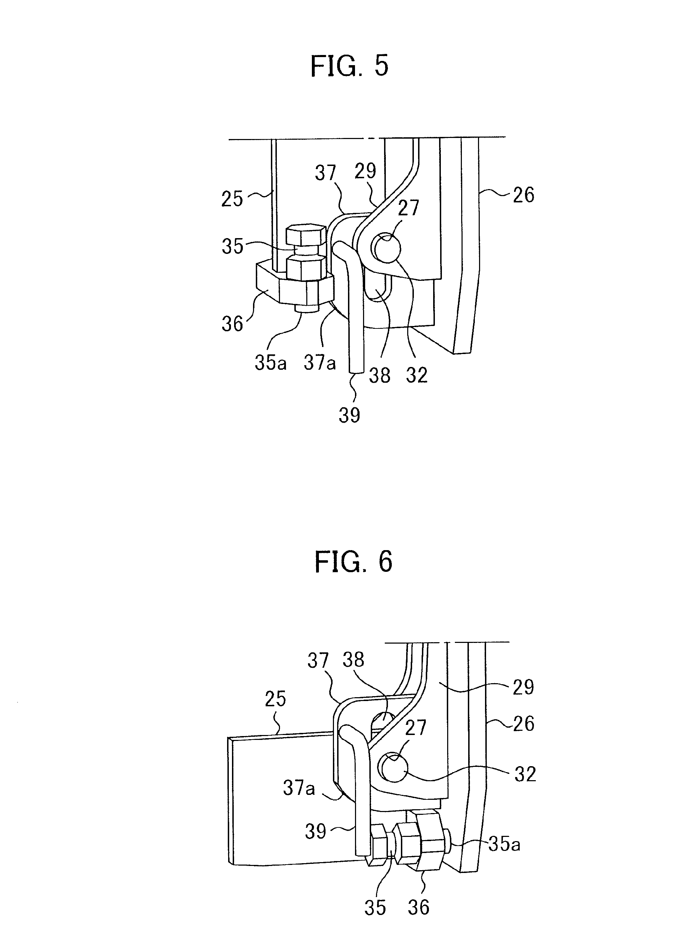

The support includes a mounting frame 26, a lower bracket 29, and an upper bracket 30. The mounting frame 26 extends in the longitudinal direction, fixed to an outer face of the upper slewing structure 2. Each of the lower and upper brackets 29 and 30 protrudes horizontally outward from the mounting frame 26 and includes a shaft hole 27 and a fixation hole 28. On the other hand, the base end of the footboard 25; that is, the end on the upper slewing structure side, is provided with a shaft hole 31, and a pivot shaft 32 is inserted through the shaft hole 31 and the shaft hole 27 of the lower bracket 29. The footboard 25 is thus supported by the support so as to be pivotable about the pivot shaft 32, the pivoting allowing the footboard 25 to be shifted between a retracted posture (raised posture) of being upstanding as shown in Fig. 1, Fig. 2A and Fig. 5 and an expanded posture (fallen posture) of being expanded horizontally outward as shown in Fig. 4 and Fig. 6.

The intermediate part of the footboard 25 is provided with a fixation hole 33 as shown in Fig. 1 and Fig. 4. A fixation pin 34 is inserted through the fixation hole 33 and a fixation hole 28 of the upper bracket 30 to thereby fully fix the footboard 25 to the retracted posture. The fixation holes 28 and 33 and the fixation pin 34 thus configure the fixing means.

The pivotable body further includes an adjustment bolt 35 and a bolt-through-hole portion 36 as a holding part for holding the adjustment bolt 35. The bolt through-hole portion 36 is formed at a specific part of the base end of the footboard 25 and includes a screw hole capable of screw-threadable engagement with the adjustment bolt 35. The specific part is positioned below the pivot shaft 32 when the footboard 25 is in the expanded posture shown in Figs. 3, 4, and 6. The adjustment bolt 35 has a tip 35a capable of abutting against the lower end of the mounting frame 26 as shown in Fig. 3 when the footboard 25 is in the expanded posture, the abutment allowing the adjustment bolt 35 to retain the footboard 25 in the expanded posture and to support the downward load acting on the footboard 25. The tip 35a of the adjustment bolt 35 can be displaced axially of the adjustment bolt 35 accompanying the relative rotation of the adjustment bolt 35 itself with respect to the bolt through-hole portion 36 screw-threably engaged with the adjustment bolt 35, and this displacement enables the horizontality of the footboard 25 in the expanded posture to be adjusted.

The bolt through-hole portion 36 is formed in a thick plate shape to retain the adjustment bolt 35 horizontally in the retracted posture of the footboard 25. Furthermore, the bolt through-hole portion 36 concurrently serves the role as a "abutment portion" which contributes to the stopper function of stopping the footboard 25 in the retracted posture, which is a raised posture.

The pivoting unit further includes a stop member 37 as a characteristic thereof. The stop member 37 has a main body made from a rectangular plate material, and is disposed between the lower bracket 29 and the footboard 25 in such a posture as to make the plate-thickness direction thereof parallel to the axial direction of the pivot shaft 32.

The stop member 37 includes a long hole 38 formed in the main body so as to vertically extend and penetrate the main body, and a handle 39 extending downward from the main body as shown in Fig. 1 to Fig. 3 with the two-dot chain line. The stop member 37 is retained in a vertical posture by the abutment of one of the right or left side surface of the main body against the outer face of the mounting frame 26. The pivot shaft 32 is inserted through the long hole 38. The stop member 37 is thus disposed so as to be capable of vertical displacement within the range of the vertical dimension of the long hole 38 along the mounting frame 26.

In other words, the stop member 37 can be moved between the lower position shown in Fig. 1, Fig. 2A and Fig. 5 and the upper position shown in Fig. 2B and Fig. 6. The stop member 37 is retained in the lower position, due to its self weight, in the retracted posture of the footboard 25. In the lower position, the stop member 37 is permitted to abut against the bolt through-hole portion 36, i.e., the abutment portion, of the footboard 25 in the retracted posture as shown in Fig. 2A and other diagrams, to thereby support the load in the falling direction of the footboard 25. Specifically, the load is supported by the mounting frame 26 via the part of the above abutment and a part at which the contact portion of the stop member 37 abuts against the mounting frame 26. The stop member 37 thus exhibits its stopper function of stopping the footboard 25 in the retracted posture which is a raised posture, that is, temporarily retaining the footboard 25.

Meanwhile, for shifting the footboard 25 to the expanded posture, the stop member 37 is upward pivoted by use of the handle 39. The stop member 37 thereby comes off upward from the pivoting locus centered around the pivot shaft 32 of the bolt through-hole portion 36, which is an abutment portion, cancelling the stopper function to permit the footboard 25 to pivot to the expanded posture.

To explain the procedure in detail, the footboard 25 is temporarily retained by the abutment of the bolt through-hole portion 36, which is an abutment portion provided to the lower end of the footboard 25 in the retracted posture, that is, the raised posture, of Fig. 1, against the stop member 37, and furthermore, the intermediate part of the footboard 25 is fixed to the mounting frame 26 by use of the fixation pin 34. Here, the stop member 37 is retained, based on its self weight, at the lower position; that is, at such a height position that the pivot shaft 32 is located at the upper end of the long hole 38.

In order to shift the footboard 25 from the foregoing state to the expanded posture, i.e, the fallen posture, the stop member 37 is upward operated to the upper position shown in Fig. 2B by use of the handle 39. The stopper function of the stop member 37 is thereby cancelled, permitting the footboard 25 to pivot to the position corresponding to the expanded posture shown in Figs. 3, 4, and 6. In this expanded posture, the adjustment bolt 35 and the bolt through-hole portion 36 has been brought under the stop member 37 to allow the bolt through-hole portion 36 to support the stop member 37 from the lower side; in this state, the tip 35a of the adjustment bolt 35 abuts against the mounting frame 26. This abutment enables the footboard 25 to be retained in the expanded state and allows the footboard load to be supported.

In this embodiment, as the shape of the stop member 37, adopted is a shape which allows the footboard 25 to avoid an interference of the outer corner part 37a with the bolt through-hole portion 36, as the abutment portion, of the stop member 37 shown in Figs. 2, 3, 5 and 6 when the footboard 25 is operated to pivot to the expanded posture. Specifically, the outer corner part 37a of the stop member 37 is formed as a circular arc surface.

As described above, with this pivoting unit, only the stop member 37 has to be raised for shifting the footboard 25 from the retracted posture, which is a raised posture, to the expanded posture, which is a fallen posture, while the overall heavy footboard 25 is not required to be raised, differently from the conventional art. This enables the shifting operation to be carried out efficiently with small workload. Besides, the stop member 37, including the handle 39 protruded outward from the main body thereof, can be operated upward easily and safely by use of the handle 39.

Moreover, the bolt through-hole portion 36 and the stop member 37 are disposed so as to allow the bolt through-hole portion 36 as the abutment portion to abut against the stop member 37 in the retracted posture of the footboard 25, in other words, the stopper function is performed in a state where the footboard 25 has pivoted to its original retracted posture; this allows the fully fixing operation, which is an operation to fix, as described in this embodiment, the footboard 25 in the retracted posture with use of the fixation pin 34 and the fixation holes 28 and 33, to be simplified.

The present invention is not limited to the embodiment explained above, but may include, for instance, the following modes.
(1) While, in the foregoing embodiment, the adjustment bolt 35 for adjusting the horizontality of the footboard 25 in the expanded posture concurrently serves as the load transmitting member for transmitting the footboard load to the mounting frame 26 in the expanded state and the bolt through-hole portion 36 for retaining the adjustment bolt 35 concurrently serves as the abutment portion which abuts against the stop member 37 to support the fall load in the retracted posture of the footboard 25, the load transmitting member and the abutment portion may be respectively configured from dedicated members that are different from the adjustment bolt 35 and the bolt through-hole portion 36.
(2) While, in the foregoing embodiment, the raised posture in which the footboard 25 is retained corresponds to the retracted posture, i.e., the upstanding posture, the raised posture may also be an intermediate posture between the expanded posture and the retracted posture.
(3) The pivotable body according to the present invention is not limited to a footboard constituting a catwalk. The present invention can also be broadly applied to a device including a pivotable body capable of pivoting between a fallen posture and a posture which is more erect than the fallen posture (upstanding posture or intermediate posture), for example, such as a handrail used in a catwalk.

As described above, according to the present invention, provided is a pivoting unit including a pivotable body capable of pivoting between a fallen posture and a raised posture, the pivoting unit having a function of retaining the pivotable body in a raised posture while allowing the posture of the pivotable body to be easily and efficiently shifted. The pivoting unit provided by the present invention comprises: a pivotable body; a horizontal pivot shaft, a support for supporting the pivotable body pivotably about the pivot shaft so as to allow the pivotable body to take both of a fallen posture and a raised posture in which the pivotable body is more raised than the fallen posture; and a stop member for stopping the pivotable body in the raised posture. The stop member includes a long hole which has a shape vertically extending and allowing the pivot shaft to be inserted through the long hole, disposed so as to be restricted from pivot movement relative to the support between an upper position and a lower position while being permitted to make vertical movement within a range of a vertical dimension of the long hole. At the lower position, the stopper member abuts against an abutment portion which is a specific part in a lower end of the pivotable body in the raised posture to retain the pivotable body in the raised posture; in the upper position, the stopper member comes off from a pivoting locus of the abutment portion of the pivotable body to thereby permit the pivotable body to pivot from the raised posture toward the fallen posture.

According to this pivoting unit, in the raised posture of the pivotable body, the stop member that has descended to the lower position due to its self-weight abuts against the abutment portion of the pivotable body, thereby exhibiting its stopper function of stopping the pivotable body in the raised posture. In this state, the operation of raising the stop member from the foregoing state to the upper position brings off the stop member from the pivoting locus of the abutment portion to cancel the stopper function. In other words, only the stop member needs to be raised for shifting the pivotable body to the fallen posture, with no need to raise the overall pivotable body.

The present invention can be applied, for instance, to cases where the support is mounted on an upper slewing structure of a construction machine provided with a base machine including a base carrier and the upper slewing structure and the pivotable body includes a footboard configuring a catwalk. In this case, it is preferable that the stop member abuts against the abutment portion in a retracted posture, which is an upstanding posture, as the raised posture of the footboard. Also in this case, raising the stop member to the upper position to cancell the stopper function permits the posture of the footboard to be shifted to an expanded posture, which is the fallen posture. Thus, only the stop member needs to be raised for shifting the footboard to the expanded posture, with no need to raise the overall footboard.

The pivoting unit according to the present invention, preferably, further comprises a fixing member for fixing the pivotable body to the support in the raised posture of the pivotable body. The fixing member enables the pivotable body to be retained in the raised posture more reliably. In addition, the stop member, abutting against the abutment portion of the pivotable body to stop the pivotable body in this raised posture, enables the operation of fixing the pivotable body in the raised posture to the support by use of the fixing member to be simplified.

In the present invention, the abutment portion of the pivotable body is, preferably, brought under the stop member in the fallen posture of the pivotable body to support the stop member from the lower side in the upper position. This makes it unnecessary to raise the stop member to the upper position once again for pivoting the pivotable body from the fallen posture to the raised posture.

Besides, in the present invention, the stop member preferably includes a handle to be held for raising the stop member to the upper position. This handle enables the operation of raising the stop member to the upper position to be performed easily and safely.

This application is based on Japanese Patent application No. 2012-216967 filed in Japan Patent Office on September 28, 2012, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

Provided is a pivoting unit including a pivotable body, a horizontal pivot shaft, a support for supporting the pivotable body pivotably about the pivot shaft so as to allow the pivotable body to take a fallen posture and a raised posture in which the pivotable body is more raised than the fallen posture, and a stop member for stopping the pivotable body in the raised posture. The stop member includes a long hole vertically extending and allowing the pivot shaft to be inserted therethrough, being disposed vertically movably between upper and lower positions. The stop member, in the lower position, abuts against an abutment portion, a specific part at a lower end of the pivotable body in the raised posture, to retain the pivotable body in the raised posture, while, in the upper position, allowing the pivotable body to pivot from the raised posture toward the fallen posture.

## Claims

1. A pivoting unit, comprising:
a pivotable body;
a horizontal pivot shaft;
a support for supporting the pivotable body pivotably about the pivot shaft so as to allow the pivotable body to take both of a fallen posture, and a raised posture which is a posture in which the pivotable body is more raised than the fallen posture; and
a stop member for stopping the pivotable body in the raised posture, the stop member including a long hole which has a shape vertically extending and allowing the pivot shaft to be inserted through the long hole, the stop member being disposed so as to be restricted from a pivot movement relative to the support while being permitted to make a vertical movement between an upper position and a lower position relative to the support within a range of a vertical dimension of the long hole, wherein, at the lower position, the stopper member abuts against an abutment portion which is a specific part in a lower end of the pivotable body in the raised posture to retain the pivotable body in the raised posture, while, in the upper position, the stopper member comes off from a pivoting locus of the abutment portion of the pivotable body to thereby permit the pivotable body to pivot from the raised posture toward the fallen posture.

2. The pivoting unit according to claim 1, wherein the support is mounted on an upper slewing structure of a construction machine provided with a base machine including a base carrier and the upper slewing structure, the pivotable body including a footboard configuring a catwalk, the stop member adapted to abut against the abutment portion when the footboard is in a retracted posture which is an upstanding posture as the raised posture.

3. The pivoting unit according to claim 1 or 2, further comprising a fixing member for fixing the pivotable body to the support when the pivotable body is in the raised posture.

4. The pivoting unit according to any of claims 1 to 3, wherein the abutment portion of the pivotable body is brought under the stop member to support the stop member from the bottom in the upper position, when the pivotable body is in the fallen posture.

5. The pivoting unit according to any of claims 1 to 4, wherein the stop member includes a handle to be held for raising the stop member to the upper position.
